# EUROPEAN PATENT APPLICATION

(11) **EP 2 592 508 A1**
(43) Date of publication of application: **15.05.2013**
(21) Application number: 12192504.4
(22) Date of filing: 14.11.2012
(51) Int. Cl.: G05B 19/042, G08B 9/00, G08B 21/00

(54) **Electrical household system performing telemedicine and/or telecare functions, and corresponding method**

(30) Priority: 14.11.2011 IT TO20111049
(71) Applicant: Indesit Company S.p.A., 60044 Fabriano (AN) (IT)
(72) Inventor: Aisa, Valerio, 60044 Fabriano (AN) (IT); Frattesi, Stefano, 60019 Senigallia (AN) (IT); Milani, Monica, 60035 Jesi (AN) (IT)
(74) Representative: Santonicola, Paolo

(57) **Abstract**

An electrical household system comprises:
- a local-area communication network (40);
- at least one electrical household device (70, 75, 76, 80, 85, 90); and
- a device performing telemedicine and/or telecare functions (30), configured for transmitting on the wide-area communication network (45) information representing the viability of a user of the at least one electrical household device (70, 75, 76, 80, 85, 90).

The system further comprises communication means (35; 35, 100; 35; 101; 35, 102), for putting on the local-area communication network (45) information representing events of interaction of the user with the at least one electrical household device (70, 75, 76, 80, 85, 90). The system further comprises an electronic device (10) connected in signal communication to the local-area communication network (40) and pre-arranged for:
- acquiring from the local-area communication network (40) said information representing events of interaction of the user,
- processing said information representing events of interaction of the user in order to generate said information representing of the state of viability of the user; and
- communicating to the device performing telemedicine and/or telecare functions (30) said information representing of the state of viability of the user.

## Description

### Field of the invention

The present invention relates to the field of telemedicine and in particular to that of telecare of elderly people at their own home. More in particular, the invention regards solutions aimed at simplifying the use of electrical household devices, that are able to perform the role of "sensors of viability" of the user, in combination with a telemedicine and/or telecare system.

### State of the art

The average life of the population is increasing everywhere thanks to the conquests of medicine and as a result of prevention in regard to illnesses that the majority of countries has for some time now been pursuing. This fact, which is in itself very positive, is, however, producing a progressive ageing of the population of the planet with the consequent need, on the part of the governments, above all of the more developed countries, to create the conditions for the citizen to be able to preserve as long as possible his own autonomy and independence and his capacity to maintain the quality of his life at a high level, at the same time reducing to a minimum the expenses for healthcare that are paid for by the state. One of the most effective ways to meet this need is to favour the use of telemedicine and/or telecare systems based upon the Internet, which, through the aid of appropriate sensors that are able to monitor the vital parameters of the user and the characteristics of the domestic environment in which he or she lives, help the elderly person to safeguard a level of life that is qualitatively decent, limiting to the bare minimum recourse to hospitalization. Systems of this type are starting to spread everywhere in the world, favoured by the increasing availability of sophisticated sensors that can be carried on the person and are able to monitor the vital parameters of the user, as well as being supported by appropriate medical structures, whether public or private, that are able to offer adequate services of telemedicine and/or telecare.

The major limit of current telemedicine and/or telecare systems lies in the fact that they are mostly aimed at users suffering from rather serious illnesses and presuppose, on the one hand, the use of sophisticated sensors that can be worn and that are able to monitor the vital parameters of the person and, on the other hand, the interaction with appropriate hospital structures that are able to interface with said sensors and to provide the service required. This means that these systems tend above all to be aimed at elderly people with problems and to exclude those who enjoy a fairly good state of health and intend to maintain that level of quality of life over time. In addition, the low availability of public medical structures that are able to provide services of telemedicine according to international standards (for example, the standard HL7 of interoperability between different hospital equipment) tends to mean that the applications of telemedicine are currently directed at a niche portion of users and do not meet the effective needs associated to the increased longevity of the population at large.

There exist in the prior art attempts at associating to given household devices, such as refrigerators (see, for example, the international patent application No. WO 2011/030288) or other electrical household appliances, the task of capturing, processing, and storing the events of interaction with the user, but such proposals prove difficult to apply in so far as they are characterized by the following limits:
a) they are not in general set in relation with telemedicine and/or telecare systems, but they have only the task of generating statistical information on the modes of use of the products in order to make improvements to their operation to meet more fully user requirements;
b) if they are set in relation with telemedicine and/or telecare systems, they tend to perform a role resembling that of the sensors used in the aforesaid systems for detecting the vital parameters of the user, introducing non-negligible complexity of interfacing and costs, while their function is of a very different nature, of a less specialist nature and limited to contributing to monitoring the everyday behaviour of the user;
c) they perform complex additional functions - such as, for example, detection of the events of interaction with the user, storage thereof, processing thereof in order to deduce the habits of the user, analysis thereof to verify the presence of any anomalous behaviour - which impose the use of digital control systems having a greater processing capacity and larger system memories, i.e., control systems that, since they do not respect the severe constraints of cost proper to the sector of electrical household appliances, are suitable only for high-ranging niche-market products, which, however, on account of their limited diffusion, are unable to make an effective contribution to solving the problem of home care for elderly people using Internet technologies that lies at the basis of the present invention;
d) the electrical household appliances in question must necessarily be provided with digital control systems and appropriate means for their connection to a local-area network, but products of this type are not yet available and their penetration on the market is likely to be very slow and in any case only gradual;
e) traditional electrical household appliances, which in effect are the ones currently present in most homes, are, instead, strictly excluded from the capacity of performing the role of sensor of viability of the user.

### Summary of the invention

The aim of the present invention is to overcome the aforesaid limits of the known art in order to contribute to extending the scope of traditional telemedicine and/or telecare. This is obtained, according to the invention, by an electrical household system and by a method for performing telemedicine and/or telecare that present the characteristics of the annexed claims. The claims form an integral part of the technical teaching provided herein in relation to the invention.

In brief, the invention has the aim to introduce new tools and methods for monitoring and controlling elderly people who enjoy a fairly good state of health, who desire to maintain their own autonomous and independent living conditions in safety and so that they can be closer to the members of their own family or relatives who do not live with them. These modalities of monitoring and control are based, according to the invention, upon the detection of the events of interaction of the user with communicating household devices, which for this purpose perform the role of "sensors of viability" of the user, as is in part known from the international patent application No. WO 2011/030288 referred to above, since they enable the person's habitual behaviour to be deduced, as well as enabling others to be notified of any possible anomalies that might be associated to situations of distress or danger. The present invention proposes advantageous improvements to the aforesaid international patent application No. WO 2011/030288, enabling interfacing with any telemedicine and/or telecare system, in a simple and inexpensive way, together with domestic devices able to communicate in a direct or indirect way.

In one embodiment of the present invention, this role of "viability sensors" is performed by the so-called "smart appliances", i.e., by the latest-generation electrical household appliances that are able to communicate with the outside world, for example with electrical utilities, in order to adapt their power absorption to the effective energy availability of the new-generation electric mains, the so-called "smart grids".

### Brief description of the drawings

The invention will now be described in detail with reference to the attached figures, which are provided purely by way of non-limiting example and in which:
- Figure 1 shows the general architecture of a household power-management system according to one embodiment of the invention;
- Figure 2a shows the block diagram of an electrical household appliance, which is provided inside with means of its own for connection to a local-area communication network and interacts with an adapter device provided according to the invention;
- Figure 2b shows the block diagram of an electrical household appliance able to connect up to a local-area communication network - connected to which is an auxiliary electronic device according to the invention - through communication means set in an external adapter device with which the electrical household appliance itself is able to exchange information in a bidirectional way through its own supply cable;
- Figure 2c shows the block diagram of a variant of Figure 2b, in which the electrical household appliance is able to connect up to a local-area communication network - connected to which is the auxiliary electronic device according to the invention - through communication means located in an external adapter device with which the electrical household appliance itself is able to exchange information in a unidirectional way through its own supply cable;
- Figure 2d shows the block diagram of a traditional electrical household appliance that is not able to communicate, the levels of consumption of which are monitored, in one embodiment of the invention, by means of an external adapter device provided with measurement means, as well as with means for interface towards a local-area communication network, connected to which is an auxiliary electronic device according to the invention;
- Figure 2e shows the block diagram of an example of auxiliary electronic device for monitoring the viability of the user, according to the invention;
- Figure 2f illustrates a flowchart that describes the basic operation of an auxiliary electronic device according to the invention;
- Figure 3a describes a possible modality of sending of data from an electrical household appliance to an adapter device of the type shown in Figure 2b or Figure 2c;
- Figure 3b shows waveforms associated to Figure 3a;
- Figure 3c describes a possible mode of sending data from an adapter device of the type shown in Figure 2b to an electrical household appliance;
- Figure 4 represents an electrical household system, performing telecare functions, according to a possible embodiment of the invention; and
- Figure 5 represents an electrical household system, performing both telecare functions and energy-management functions by means of one and the same communication infrastructure, according to a possible embodiment of the invention.

### Description of preferred embodiments of the invention

In the ensuing description various specific details are illustrated aimed at an in-depth understanding of the embodiments. The embodiments may be provided without one or more of the specific details, or with other methods. In other cases, known structures or operations are not shown or described in detail so that various aspects of the embodiments will not be obscured. Reference to "an embodiment" or "one embodiment" in the context of the present description is intended to indicate that a particular configuration, structure, or characteristic described in relation to the embodiment is comprised in at least one embodiment. Hence, phrases such as "in an embodiment" or "in one embodiment" and the like that may be present in various points of this description do not necessarily refer to one and the same embodiment. In addition, particular conformations, structures, or characteristics may be combined in any adequate way in one or more embodiments, which may even differ from the ones described. The references used herein are provided purely for convenience and hence do not define the sphere of protection or the scope of the embodiments.

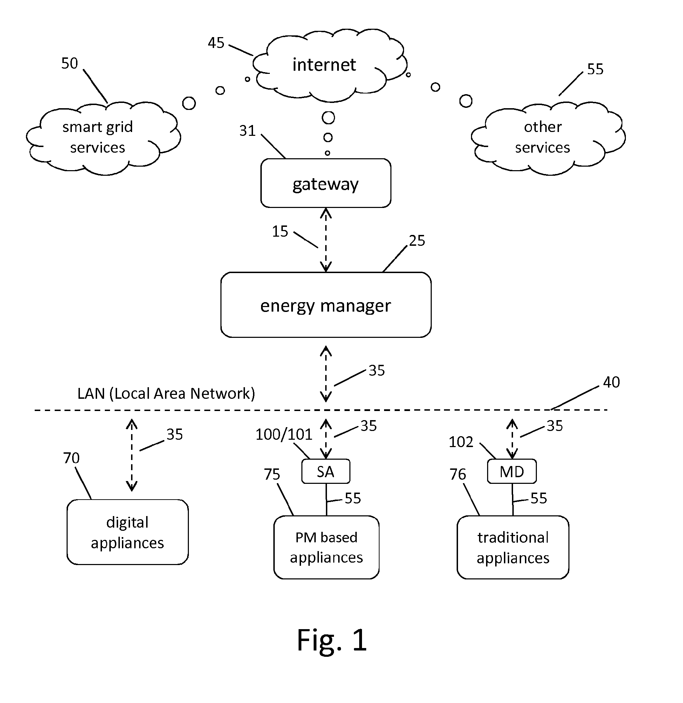

Figure 1 is a schematic representation of an electrical household system for management of domestic electrical consumptions, based upon interaction between an electrical utility and the electrical household appliances designated by 70, 75 and 76. Said electrical household appliances are equipped for this purpose with communication means 35 for connection to a local-area communication network (LAN) 40, to which an energy manager 25 is in turn connected. The energy manager 25, through an appropriate gateway 31, can interact with a wide-area communication network (WAN) 45, here represented by the web, to offer energy-management services 50 that derive from the on-going evolution of the electric-power mains (a global phenomenon known as "smart grids"), and other innovative services 55 - such as, for example, remote after-sales service for electrical household appliances, their preventive maintenance, monitoring of modalities of use aimed at product improvement, and so on - that are a direct consequence of the capacity for direct or indirect interaction of electrical household appliances. In fact, the marked on-going evolution in systems for the generation of electrical energy, characterized by an increasing contribution from renewable energy sources, is rendering necessary and indeed urgent a global review of systems for distribution of the energy produced, envisaging an increase in the use of ICTs for real-time monitoring of the effective power available at any instant on the electric mains so as to guarantee as far as possible maintenance of a constant balance between the electric power generated upstream and the power absorbed downstream by the various user devices - said balance being a guarantee of maximum efficiency and minimum environmental impact - through direct negotiation with said user devices.

To achieve the aforesaid targets of efficiency and reduced environmental impact it is hence necessary for the electrical household devices, in particular electrical household appliances, to be able to adapt their operation as much as possible to the requirements of the grid, seeking to reduce, even to zero, their current consumption in times of peak demand and, conversely, to exploit as much as possible the situations of greater energy availability, at the same time safeguarding the quality of performance for the user. This can be obtained only if each electrical household appliance is able to "know" constantly the situation of the grid so as to be able to adapt its own operation to the requirements of the latter, at the same time guaranteeing the quality of its final performance in regard to the user, in other words, only if said electrical household appliance is equipped with appropriate means 35 for communicating directly with the system for management of the electric mains 25 and is provided with an appropriate control system that is able to modify its working cycle.

Electrical household appliances of the above type are not yet present on the market, but the major manufacturers of white goods in the world have announced the intention of making them progressively available in the next few years. It is hence a dynamic process based upon the negotiation of the energy available, which, if there is an excess, is offered by the electrical utility at a reduced price for stimulating consumption thereof and, conversely, if there is a shortage, use thereof is discouraged by its high cost, it being possible for this action of negotiation to occur in a substantially automatic way, albeit under the supervision of the user, thanks to the direct interaction between the utility and new-generation electrical household appliances 70 and 75.

Furthermore, as has already been mentioned, this approach would also afford the major advantage of enabling, thanks to exploitation of the capacity of self-diagnosis proper to latest-generation electrical household appliances, remote after-sales service and preventive maintenance thereof through the same communication infrastructure 40, 25 and 30 as the one used for optimization of energy consumption. Finally, in the case of traditional electrical household appliances 76, the use of an appropriate energy monitor 102, connected to the network 40 via the communication means 35, enables monitoring of consumption over time.

The communication infrastructure itself adopted for management of the aforesaid energy problems can be used, in one embodiment of the invention, also for managing problems of telecare, exploiting the fact that said network-connected household devices can also perform functions of "sensors of viability" of the user, as described more fully in what follows.

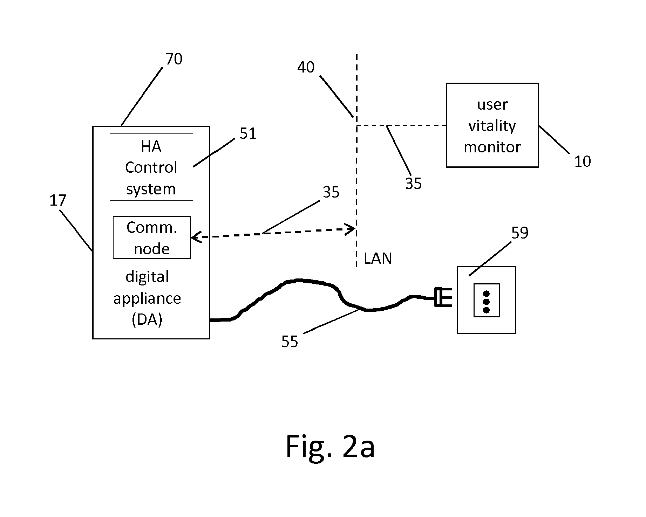

Figure 2a represents by way of non-limiting example an electrical household appliance 70 according to an embodiment of the invention, distinguished by a digital control system 51, which is designed to detect events of interaction with the user and is able to communicate with a local-area network 40 through a communication node 17 installed within the product itself. Connection of the node 17 to the local-area network 40 may be based upon radio frequency 35, there also being connected to the same, network using similar modalities (35), an auxiliary electronic device 10 that performs, according to the invention, the function of collector of the events of interaction of the user with the electrical household appliance 70. According to the invention, the electrical household appliance 70 communicates on the network 40 notification of every event of interaction with the user at the moment when this occurs, said notification being aimed at the device 10, which acquires it, stores it, and processes it according to the modalities that will be described hereinafter. In this way, the electrical household appliance 70 can perform the function of communicator of events of interaction with the user, without requiring complex and costly operations on the part of its own control system 51: in fact, given that the control system 51 does not have to store and carry out complex processing operations on the information regarding the events of interaction with the user, it does not need to be equipped with a more powerful processor or have available additional memory, but coincides with the one already present in the standard electrical household appliance 70.

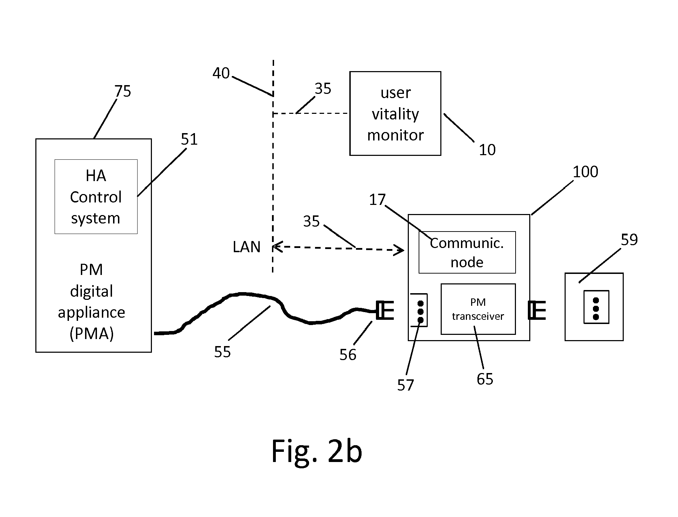

Figure 2b shows, instead, a variant with respect to Figure 2a, **characterized in that** the electrical household appliance 75 with digital control system 51, which is also designed to detect events of interaction with the user, is connected to the local-area network 40 - to which the device 10 provided according to the invention is connected - through the mediation of an external adapter 100, set between the supply cable of the product and a source of electrical energy, for example a customary current outlet. Communication between the electrical household appliance 75 and the adapter device 100 is of a bidirectional type and is obtained through the supply cable 55 - the plug 56 of which is connected to the outlet 57 of the device - according to the known communication technique referred to as "power modulation", the general principles of which are described, for example, in the article "Connecting white goods to a home network at a very low cost", Aisa et al., International Appliance Manufacturing, 2004 and in the international patent applications Nos. WO 02/21664 and WO 2007/045946. For said purpose, the adapter device 100 is provided with a transceiver arrangement 65, based upon power modulation. Also in this case, the electrical household appliance 75, like the electrical household appliance 70 of Figure 2a, can perform the function of communicator of events of interaction with the user, without requiring complex and costly operations on the part of the control system, i.e., using the same control system 51 as that of the standard product.

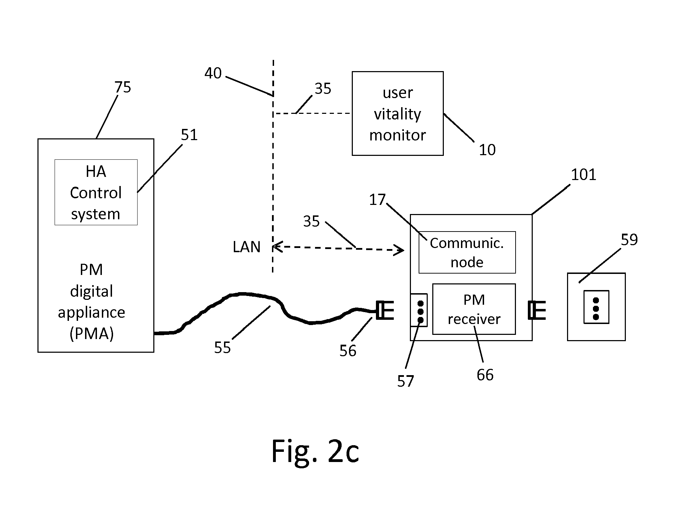

Figure 2c illustrates a further variant, with respect to Figure 2b, where the communication between the electrical household appliance 75 and the adapter device, here designated by 101, is of a unidirectional type and goes from the electrical household appliance (transmitter only) to the adapter device itself (receiver only). For said purpose, the adapter device 101 is provided with a receiver arrangement 66, based upon power modulation. Also in this case, as in the case of Figure 2b, the connection to the local-area network 40 - to which the device 10 provided according to the invention is connected - is obtained through a communication node 17 based upon radio frequency (35). The advantage of the solution of Figure 2c, as compared to that of Figure 2b, lies in the fact that, since, for the purposes of the invention, transmission from the adapter device 101 to the electrical household appliance 75 is not necessary, the absence of said transmission simplifies and reduces the costs of the control system 51 of the electrical household appliance 75 and, above all, of the adapter device 101, which is simpler than the adapter device 100 of Figure 2b.

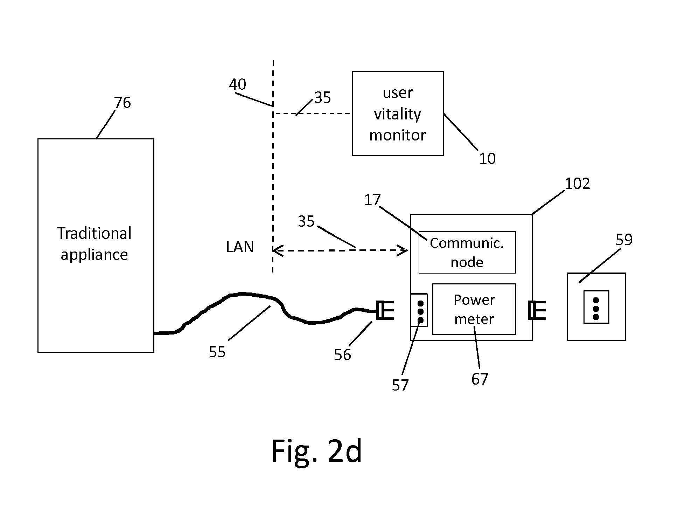

Figure 2d illustrates the electrical household appliance 76 characterized by a control system of a traditional type, without any capacity for communication with the surrounding environment and connected to the source of electrical energy represented by the current outlet 59 through the adapter device, here designated by 102, said adapter device 102 being able to measure the consumption of electrical energy and the instantaneous absorption of current of the electrical household appliance 76 - thanks to the power-meter device designated by 67 - and, on the basis of these, derives indirectly the events of interaction of the user: for example, activation of a washing cycle in the case of a laundry washing machine, turning-on of the light upon opening of the door in the case of a refrigerator, and so forth. The adapter device 102 is hence able to intercept indirectly the events of interaction of the user through the variations in power absorption of the corresponding electrical household appliance, there being provided in its memory the necessary information on current absorption associated to the various states of operation of the electrical household appliance itself.

Connection to the local-area network 40 is made once again through a communication node 17 based upon radio frequency 35, there being connected on this same local-area network 40, once again via radio frequency 35, a device 10 that performs, according to the invention, the function of collector of the events of interaction of the user with the electrical household appliance 76.

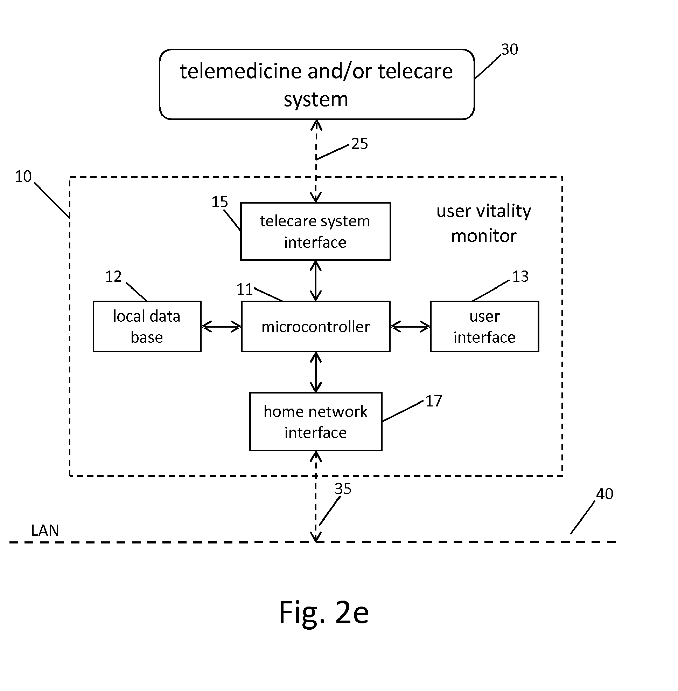

The block diagram of the device 10, which regards monitoring of the viability of the user, according to the invention, is represented in Figure 2e, which highlights the central role of the microcontroller 11 that presides over control of the device 10 itself. The microcontroller 11 is provided with a central memory 12 sufficiently large to house the data (in the form of appropriate basic relational data), associated to the events of interaction with the user of the various household devices described above and referred to a given period in time, such as for example one month, this period being understood in any case as a configurable parameter that may assume, as required, the value deemed most suitable for a given telemedicine and/or telecare application.

The block 13 highlights the possible interface of the device 10 with the user or, rather, with specialized technical staff, who, via the aforesaid interface, can configure the device itself manually to adapt it to the telemedicine and/or telecare system to which it is associated. The user interface 13 is in any case to be considered as an optional, because the configuration of the device 10 can be performed, in one embodiment of the invention, in an automatic way through the interface 15, which sets the microcontroller 11 in relation with the device 30, which here fulfils also telemedicine and/or telecare functions. In this case, it is the telemedicine and/or telecare system 30 that configures the device 10 appropriately according to the type of service offered to the user. Finally, the microcontroller 11 is connected to the local-area network 40 through an appropriate communication node 17, similar to the one used for network connection of the various household devices that provide notification of their interaction with the user.

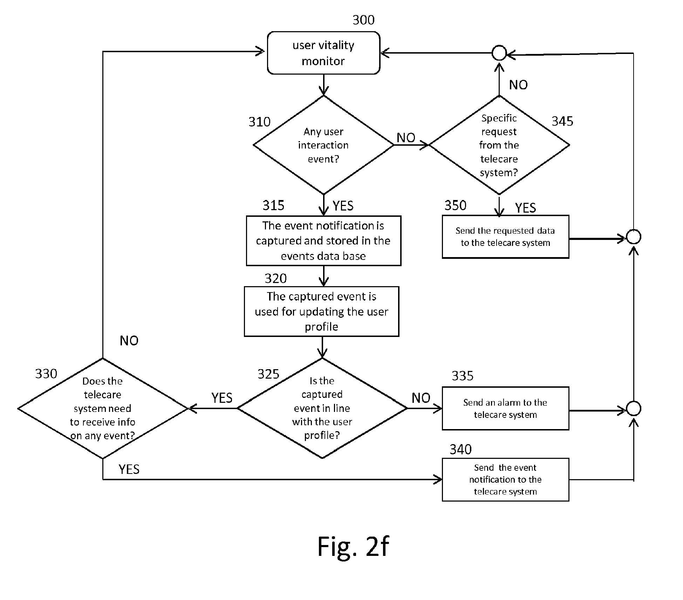

Finally, Figure 2f illustrates, through a flowchart, basic operation of the device 10 according to the invention. The block 300 represents the starting point of a cyclic sequence of operations that the device 10 carries out continuously to perform its function of real-time collector of all the events of interaction with the user by the various household devices that are able to communicate said events, according to the invention, just as they arise.

From the initial block 300 the control passes to block 310, which is a test block that verifies the presence or otherwise on the local-area network 40 of notification of an event of interaction with the user by the aforesaid communicating household devices. If the outcome of the test 310 is negative, control passes to block 345, which is another test block that verifies the presence of possible requests by the telemedicine and/or telecare system 30. If there are no specific requests (for example, the historic profile of the user or else the temporal frequency of given events and so forth) by the telemedicine and/or telecare system, control returns to the initial block 300. Otherwise, the device 10 sends to the telemedicine and/or telecare system 30 the information requested by the latter. If, instead, the outcome of the test 310 is positive, control passes to block 315 dedicated to capturing the notification of the event of interaction and its storage in the database 12 of the events of interaction with the user; then control passes to block 320, which is a block for processing the data present in the aforesaid event database in order to update the user profile (daily habits of the user in relation to the use of the various communicating household devices according to the invention). Next, control passes to the test block 325, which verifies whether the event just captured is in line or not with the habits of the user and hence such as to be considered as expressing a normal state of affairs, or else whether said event, instead, appears as exceptional or in any case anomalous with respect to the user profile. In this case, control passes to block 335, which warns the telemedicine system 30 of the anomalous event, and then returns to the initial block 300. Otherwise, since it is an event that falls within the normal habits of the user, control passes to the test block 330, which, on the basis of the initial configuration of the device 10 according to the telemedicine and/or telecare system 30, returns control to the initial block 300 if the telemedicine and/or telecare system has not asked to receive timely notification upon occurrence of any event of interaction with the user by the communicating household devices according to the invention. Otherwise, notification of the current event is sent through the block 340 to the telemedicine and/or telecare system 30, and control returns to the initial block 300.

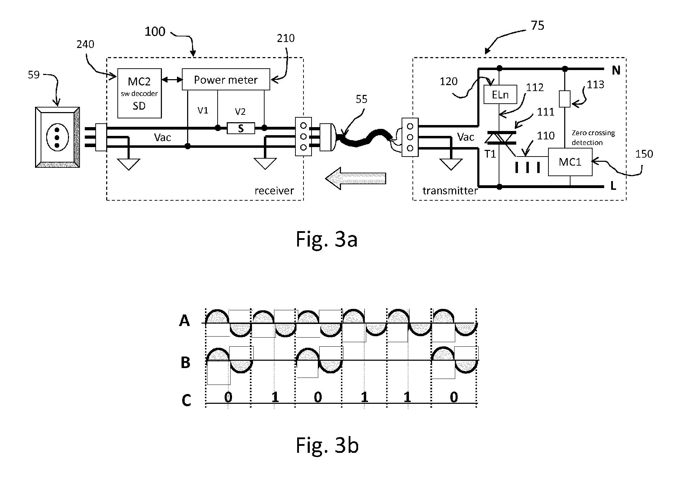

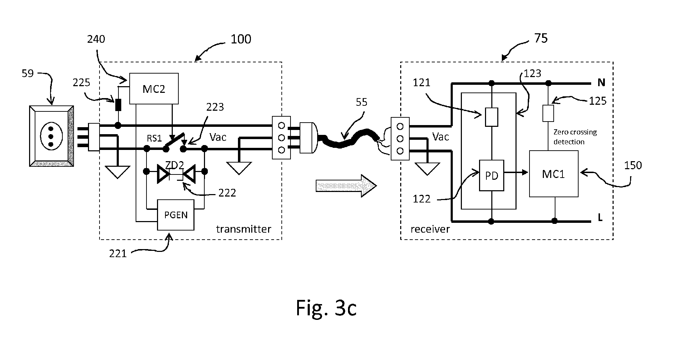

As regards the communication technique referred to as "power modulation", based upon the international patent applications Nos. WO 02/21664 and WO 2007/045946 cited above, its operating principle is described by Figures 3a-3b-3c, where Figure 3a highlights the transmission from the electrical household appliance 75 to the adapter device 100 (or 101), Figure 3b represents an example of the plots of the mains voltage across the triac 111 during transmission of the bits "010110", and Figure 3c is a schematic illustration of the modalities of transmission of the data from the adapter device 100 to the electrical household appliance 75.

Very briefly, the electrical household appliance 75 transmits its information, acting on a low-power electrical load 120 (for example, a solenoid valve for charging of water in the case of a washing machine or of a dish washer, a fan in the case of an oven, a light in the case of a refrigerator, and so on) driven via a triac 111 and associating one bit to each mains period according to the following logic: triac in conduction = logic "1", triac off = logic "0" (see Figure 3b). The adapter device 100 (or 101) captures this information, measuring cycle by cycle, by means of an appropriate power meter 210, the variations of power absorption by the electrical household appliance 75 and decoding said information with the aid of purposely provided algorithms managed by the microcontroller 240. In this way, the electrical household appliance 75 can transmit one bit for each cycle of the electric mains, i.e., 50 or 60 bits/s respectively for a frequency of 50 or 60 Hz.

Likewise, the adapter device 100 can transmit information to the electrical household appliance 75 by making, in each mains period, in one out of sixteen possible timeslots associated to each half-wave, an impulsive variation of the a.c. mains voltage that supplies it: said variation, which is in the region of 12 V, is obtained by setting in series a Zener diode 222 at a given instant (one out of the sixteen timeslots envisaged) of both of the half-waves and with the aid of two MOSFETs (not visible in the figure) controlled by the microcontroller 240. The electrical household appliance 75, if it is pre-arranged for this purpose, can decode said information by measuring the distance in time between the instant of zero-crossing of the mains voltage and the instant in which the impulsive variation said mains voltage is detected, via an appropriate shunter circuit (capacitor 121 in series to the impedance 122) that is able to filter the voltage pulse sent by the adapter device 100 and transmit it to the microcontroller 150, which has the task of identifying at which one of the sixteen possible timeslots (16 different possibilities = 4 bits, i.e., a nibble) the aforesaid voltage pulse has been applied. In this way, the adapter device 100 can transmit one nibble (half a byte) for each mains cycle, i.e., 200 or 240 bits/s for a frequency of 50 or 60 Hz, respectively. For a more detailed description of operation of the power-modulation communication technique, reference may be made in any case to the text of the aforementioned international patent applications Nos. WO 02/21664 and WO 2007/045946.

The most important benefit deriving from the use of power modulation is the fact that, thanks to this technique, the digital electrical household appliance 75 can exchange information with or send information to the surrounding environment using the same control electronics already present inside it and, hence, without any additional cost. Moreover, the fact that the communication node 17 shifts from the electrical household appliance 75 to the adapter device 100 or 101 means that the electrical household appliance, not only is released from the cost of the node itself, which is certainly not negligible, but also no longer has to be tied down to a given network technology and a given protocol, which, as is known, are subject to continuous updating and are hence not compatible with the low costs of maintenance proper to the sector of electrical household appliances.

The present invention regards, as has been said, telemedicine and/or telecare for elderly people at their own home and associates to a digitally controlled electrical household appliance of the type designated by 70 and 75, appropriately connected to a home local-area network 40, the capacity of detecting all the events of interaction with the user and of supplying to any telemedicine and/or telecare system information on the status of viability of the user and on possible anomalies of behaviour that might point to a situation of distress or danger for said user.

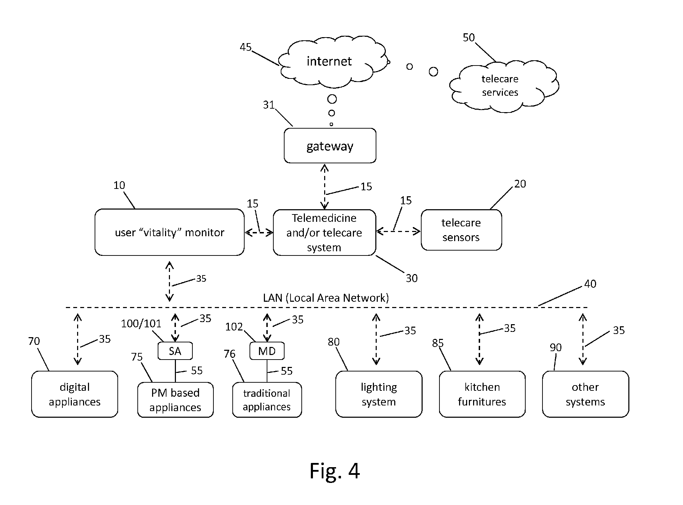

In the case of a traditional electrical household appliances 76, detection of the events of interaction with the user occurs in an indirect way, according to the invention, thanks to the device 102, which is able to measure power absorption, to detect indirectly the actions of the user on the product (for example, switching-on or switching-off) and to communicate in the local-area network 40, through appropriate means 35, notification of the aforesaid actions. All this is obtained, in an embodiment of the invention, through a system of the type represented in Figure 4, which shows the general architecture of an electrical household system performing the operation of telemedicine and/or telecare, in which the gateway 31 is to be understood as a device that, in addition to guaranteeing the connection to the Internet (45) and being able to interface according to the known art with specific sensors dedicated to monitoring vital parameters of a user (according to his or her effective needs, deriving from a given state of health) and the environmental characteristics of the place where the user lives, is also able, according to the present invention, to interact with the device 10, which is designed to gather and process the notifications of the events of interaction of the user with the electrical household appliances 70 and 75 (which, for this purpose, perform the role of "sensors of viability" of the user), and with traditional electrical household appliances 76, the interactions of which with the user are detected in an indirect way through the device 102, which is able to measure the absorption of electric power by the product.

In a similar way, other household systems - such as for example the lighting system 80, the kitchen furniture 85, and other systems with which the user has to do every day - can contribute to supplying useful information for monitoring the state of viability of the user, according to the invention: in particular, the lighting system 80 may be able to communicate to the local-area network 40, to which it is connected, the events of interaction with the user, for example switching-on or switching-off of lights; the kitchen furniture 85 is characterized, according to the invention, by a system of sensors that detect opening and closing of the various drawers and doors and by a control system that is able to communicate to the local-area network 40, to which it is connected, the events of interaction with the user; the other systems 90 represent, according to an embodiment of the invention, any device present in the domestic environment that is able to detect events of interaction with the user and to communicate them through the local-area network 40 to which it is connected, such as for example a presence detector, a sensor for detecting opening or closing of doors, a sensor for detecting the state of operation of a television set and/or of a small electrical household appliance, a meter for measuring the variations of absorption of electrical current by a given area of the dwelling (for example the kitchen area).

The invention hence proposes also a method for enabling the household devices that are able to communicate directly or indirectly the events of interaction with the user to contribute to monitoring the daily state of viability of elderly users, interacting with any telemedicine and/or telecare system through an appropriate device 10 that is able of acquire, store, and process the information on the aforesaid events of interaction with the user so as to be able to perform the role of "sensor of viability" of said user for said telemedicine and/or telecare system of any type.

A first distinctive characteristic of the aforesaid household devices, in particular electrical household appliances 70, 75 and 76 that are able to communicate directly or indirectly the events of interaction with the user, as compared to the known art lies in the fact that they immediately communicate, on the local-area network 40 to which they are connected, notification of each event of interaction with the user at the very moment in which this occurs, avoiding the need for complex operations (such as acquisition of the event of interaction, its storage, its processing, determination of the habits of the user, identification of any anomalous behaviour, notification of said information to a telemedicine and/or telecare system, etc.), which would require inside them a costly control system. The aforesaid notifications are, instead, collected, stored, and processed by the purposely provided device 10, which is connected for this purpose to the local-area network 40 itself and has, according to the invention, the function of sensor of the status of viability of the user in regard to any telemedicine and/or telecare system with which it is in relation.

Another distinctive characteristic of the present invention as compared to the known art lies in the fact that the ensemble of the household devices communicating with the local-area network 40, to which the device 10 according to the invention is connected, can comprise traditional electrical household appliances 76, which are in themselves non-communicating but are rendered indirectly communicating, according to the invention, thanks to the presence of the auxiliary devices 102, which are able to identify the interactions of said electrical household appliances 76 with the user through the measurement of the corresponding absorption of electric power.

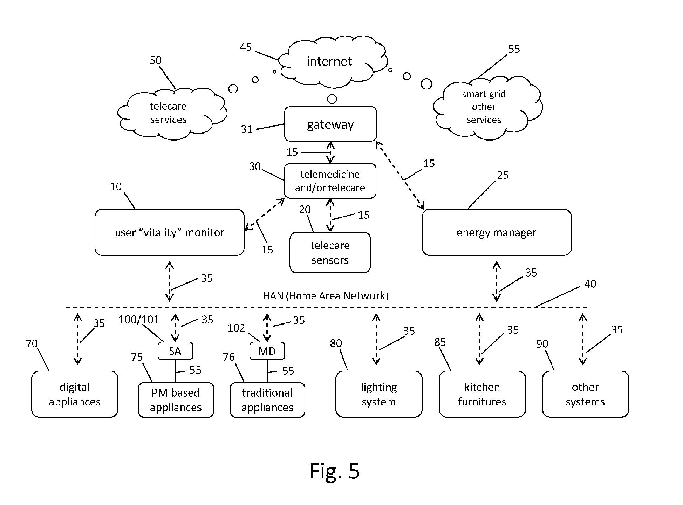

According to a particularly advantageous embodiment of the invention, moreover, a further distinctive feature of the electrical household appliances 70 and 75, of the ensemble constituted by the electrical household appliance 76 and the device 102 and of the household systems 80, 85 and 90 is the fact that the communication infrastructure used is the same as the one used by known energy-management systems of the type represented in Figure 1. Said aspect is represented in particular in Figure 5, where the electrical household appliances 70 and 75, the ensemble of the devices 76 and 102 and the household systems 80, 85 and 90 assume the dual role of active tools for home energy management and of viability sensors for the elderly user living at home, thus opening the domestic environment to new services with a high added value 50 and 55 based upon the web 45, which contribute on the one hand to reducing social expenses, at the same time increasing the quality of life of the user, and on the other to employing in a more efficient and ecological way the energy sources available. The advantages of this further characteristic are evidently of an economic and practical type, making it possible on the one hand to handle two important problems - that of energy and that of healthcare - with one and the same infrastructural investment and, on the other hand, to associate to new-generation electrical household appliances 70 and 75, basically designed to adapt their own operation to the needs of the electric-power grid while respecting the interests of the user, as well as to the other household systems - such as 76-102, 80, 85 and 90 -, the additional role of "sensors of viability" of the user.

From the foregoing description, the characteristics of the present invention emerge clearly, as likewise do its advantages. It is moreover evident that numerous variations may be made by the person skilled in the art to what has been described herein by way of example, without thereby departing from the scope of the invention, as defined in the ensuing claims.

An adapter device of the type previously designated by 100, 101 or 102 can be integrated directly in a respective current outlet 59.

## Claims

1. An electrical household system that comprises:
- a local-area communication network (40);
- at least one electrical household device (70, 75, 76, 80, 85, 90);
- a device performing telemedicine and/or telecare functions (30), connected in signal communication with a wide-area communication network (45),
wherein the device performing telemedicine and/or telecare functions (30) is configured for transmitting on the wide-area communication network (45) information representative of the vitality status of a user of the at least one electrical household device (70, 75, 76, 80, 85, 90);
the system moreover comprising communication means (35; 17, 35; 35, 100; 35; 101; 35, 102), for putting on the local-area communication network (40) information representative of events of interaction of the user with the at least one electrical household device (70, 75, 76, 80, 85, 90);
wherein the system further comprises an electronic auxiliary device (10) connected in signal communication with the local-area communication network (40) and pre-arranged for:
- acquiring from the local-area communication network (40) said information representative of events of interaction of the user,
- processing said information representative of events of interaction of the user to generate accordingly said information representative of the viability status of the user; and
- communicating to the device performing telemedicine and/or telecare functions (30) said information representative of the viability status of the user.

2. The system according to Claim 1, wherein the electronic auxiliary device (10) comprises a microcontroller (11) operatively associated to which are:
- memory means (12), for storing data associated to events of interaction of the user with the at least one electrical household device (70, 75, 76, 80, 85, 90) and referred to a predetermined period in time,
- a communication node (17) for connection to the local-area communication network (40); and
- a communication interface (15) for connection to the device performing telemedicine and/or telecare functions (30).

3. The system according to Claim 2, wherein the electronic auxiliary device (10) comprises configuration means, for configuration thereof according to the device performing telemedicine and/or telecare functions (30), said configuration means comprising in particular:
- the communication interface (15), the auxiliary electronic device (10) being configurable in an automatic way through the interface itself; or else
- a user interface (13) of the auxiliary electronic device (10), for manual configuration of the device itself.

4. The system according to Claim 1 or Claim 2, wherein the at least one electrical household device (70) has a digital control system (51) designed to detect events of interaction with the user, and a communication node (17) for transmitting corresponding information on the local-area communication network (40).

5. The system according to Claim 1 or Claim 2, wherein:
- the at least one electrical household device (75) has a digital control system (51) designed to detect events of interaction with the user and a communication arrangement based upon power modulation (PMA) for transmitting corresponding information through a supply cable (55) of the electrical household device, and
- the electrical household system further comprises an external adapter (100; 101), designed to be set between said supply cable (55) and a source of electrical energy (59), the external adapter (100; 101) including:
- a respective communication arrangement based upon power modulation (65; 66) for receiving said corresponding information; and
- a communication node (17), for transmitting said corresponding information on the local-area communication network (40).

6. The system according to Claim 1 or Claim 2, wherein:
- the at least one electrical household device (76) has a supply cable (55), and
- the electrical household system further comprises an external adapter (102), designed to be set between said supply cable (55) and a source of electrical energy (59), the external adapter (102) including:
- a measuring device (67) designed to measure the consumption of electrical energy and/or the instantaneous current absorption of the electrical household device (76) and derive indirectly therefrom information corresponding to events of interaction of the user with the electrical household device (76), and
- a communication node (17), for transmitting said corresponding information on the local-area communication network (40).

7. The system according to Claim 5 or Claim 6, wherein the external adapter (100; 101; 102) is integrated in an electrical current outlet (59).

8. A method for telemedicine and/or telecare in a domestic environment, comprising the steps of:
- putting on a local-area communication network (40) information representing events of interaction of a user with at least one electrical household device (70, 75, 76, 80, 85, 90); and
- transmitting on a wide-area communication network (45) information representative of the viability status of a user of the at least one electrical household device (70, 75, 76, 80, 85, 90), by means of a device performing telemedicine and/or telecare functions (30) connected in signal communication with the local-area communication network (40);
wherein the method further comprises the step of connecting in signal communication an electronic auxiliary device (10) to the local-area communication network (40),
and wherein said electronic auxiliary device (10):
- acquires from the local-area communication network (40) said information representative events of interaction of the user;
- processes said information representative of events of interaction of the user, for generating accordingly said information representative of the viability status of the user; and
- communicates to the device performing telemedicine and/or telecare functions (30) said information representative of the viability status of the user.

9. The method according to Claim 8, wherein the electronic auxiliary device (10) stores data associated to events of interaction of the user with the at least one electrical household device (70, 75, 76, 80, 85, 90) and refers them to a predetermined period in time.

10. The method according to Claim 8 or Claim 9, further comprising the operation of configuring the electronic auxiliary device (10) according to the device performing telemedicine and/or telecare functions (30).

11. The method according to Claim 8 or Claim 9, wherein a digital control system (51) of the at least one electrical household device (70) detects events of interaction with the user and transmits corresponding information on the local-area communication network (40).

12. The method according to Claim 8 or Claim 9, wherein:
- a digital control system (51) of the at least one electrical household device (75) detects events of interaction with the user and transmits corresponding information on a supply cable (55) of its own by means of the power-modulation communication technique; and
- said corresponding information is received by an external adapter (100; 101), set between said supply cable (55) and a source of electrical energy (59), and transmitted by the external adapter (100; 101) on the local-area communication network (40).

13. The method according to Claim 8 or Claim 9, wherein an external adapter (102), set between a supply cable (55) of the at least one electrical household device (76) and a source of electrical energy (59):
- measures the consumption of electrical energy and/or the instantaneous current absorption of the electrical household device (76);
- derives information corresponding to events of interaction of the user with the electrical household device (76), on the basis of the consumption and/or absorption measured; and
- transmits said corresponding information on the local-area communication network (40).
